# EUROPEAN PATENT APPLICATION

(11) **EP 4 687 004 A1**
(43) Date of publication of application: **04.02.2026**
(21) Application number: 25189254.3
(22) Date of filing: 14.07.2025
(51) Int. Cl.: G06F 1/16, G06F 3/0346, G06F 3/041, G06F 3/0488

(54) **SYSTEMS, APPARATUSES, METHODS, AND COMPUTER PROGRAM PRODUCTS FOR MOTION STABILIZATION IN DIGITAL PLATFORMS**

(30) Priority: 31.07.2024 IN 202411058018; 21.10.2024 US 202418922151
(71) Applicant: Honeywell International Inc., Charlotte, NC 28202 (US)
(72) Inventor: J, Kirupakar, Charlotte, 28202 (US); KHAN, Kalimulla, Charlotte, 28202 (US); KOSURI, Sri Harsha, Charlotte, 28202 (US); LEIPHON, Kenneth, Charlotte, 28202 (US); RAJENDRAN, Ramkumar, Charlotte, 28202 (US)
(74) Representative: Haseltine Lake Kempner LLP

(57) **Abstract**

Embodiments of the present disclosure provide techniques for enhanced motion stabilization in digital platforms. Motion data associated with a user device may be received. Stabilization adjustment data may be generated using a motion stabilization model and based on the motion data. User interface elements associated with a user interface of the user device may be adjusted based on the stabilization adjustment data.

## Description

### CROSS-REFERENCE TO RELATED APPLICATIONS

This application claims the benefit of U.S. Provisional Patent Application No. 63/593,860, filed October 27, 2023 and India Provisional Patent Application No. 202411058018, filed July 31, 2024, the entire contents of which are incorporated by reference herein.

### TECHNOLOGICAL FIELD

The present disclosure is generally directed to motion stabilization. Example embodiments are directed to systems, apparatuses, method, and computer program products related to enhanced motion-stabilization digital platform for accessibility applications.

### BACKGROUND

Various embodiments of the present disclosure address technical challenges related to motion stabilization. Through applied effort, ingenuity, and innovation, Applicant has solved problems related to motion stabilization by developing solutions embodied in the present disclosure, which are described in detail below.

### BRIEF SUMMARY

In general, embodiments of the present disclosure provide methods, apparatus, systems, computer program products, and/or the like for systems, apparatuses, method, and computer program products for enhanced motion-stabilization in digital platforms. The claims provided herein provide a brief summary of the disclosure.

In accordance with one aspect of the present disclosure a computer-implemented method for motion stabilization in a digital platform is provided. The computer-implemented method is executable utilizing any of a myriad of computing device(s) and/or combinations of hardware, software, and/or firmware. In some example embodiments, an example computer-implemented method comprises receiving, from one or more sensor devices, motion data associated with a user device; processing the motion data to generate processed motion data that reflects motion of a screen of the user device and comprises one or more of intensity of the motion of the screen or direction of the motion of the screen; generating, using a motion stabilization model and based on the processed motion data, stabilization adjustment data by applying the motion data to the motion stabilization model; and adjusting one or more user interface elements associated with a user interface of the user device based on the stabilization adjustment data.

In some embodiments, adjusting the one or more user interface elements comprises transmitting computer-executable instructions configured to change a position of the one or more user interface elements relative to the user interface.

In some embodiments, the computer-implemented method further comprises adjusting, using the motion stabilization model, a position and orientation of a display content on the screen of the user device.

In some embodiments, adjusting the position and the orientation of the display content comprises interpolating one or more frames and applying spatial transformations to reduce motion blur.

In some embodiments, the computer-implemented method further comprises retrieving, from a database, user profile data associated with a user, the user profile data comprising accessibility data for the user.

In some embodiments, adjusting the one or more user interface elements further comprises adjusting the one or more user interface elements based on the user profile data.

In some embodiments, the motion data is received from the one or more sensor devices comprising one or more accelerometers..

In accordance with another aspect of the present disclosure, an apparatus for motion stabilization in a digital platform is provided. The apparatus in some embodiments includes at least one processor and at least one memory storing instructions that, when executed by the at least one processor, cause the apparatus to perform any of the example computer-implemented methods described herein. In some other embodiments, the apparatus includes means for performing each step of any of the computer-implemented methods described herein.

In accordance with another aspect of the present disclosure, a computer program product for motion stabilization in a digital platform is provided. The computer program product in some embodiments includes at least one non-transitory computer-readable storage media having instructions that, when executed by one or more processors, cause the one or more processors to perform any one or the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
Figure 1 shows an example system environment within which at least some example embodiments of the present disclosure may operate.
Figure 2 illustrates a block diagram of an apparatus in accordance with at least some example embodiments of the present disclosure.
Figure 3 is a flow chart diagram showing example process for enhanced motion stabilization in digital platforms for accessibility in accordance with at least some example embodiments of the present disclosure.
Figure 4 provides an example visualization of software development kit architecture in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the present disclosure may be embodied in many different forms and should not be construed as limited to the embodiments set forth herein, rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

### Overview and Technical Improvements

Example embodiments disclosed herein address technical challenges associated with digital platforms for accessibility. A large population of people, globally, live with some form of disability. This includes significant functional difficulties. Digital accessibility remains a critical issue, as many websites and mobile applications do not meet accessibility standards, creating significant challenges and barriers and for many, in particular, for people with disabilities.

An example of these challenges is difficulty with small touch devices. Individuals with motor impairments (e.g., Parkinson's), for example, may struggle to accurately tap small buttons due to tremors, affecting their ability to interact with mobile apps. Another example is complex navigation and motion. Complex application ("app") navigation and excessive motion (e.g., animations, transitions, and/or the like) can disorient users with motion sickness or cognitive impairments, making it hard to navigate and causing discomfort. Inconsistent voice command functionality and inadequate customization options are some other examples of these challenges. Inconsistent or unavailable voice control features, for example, can hinder users who rely on speech input due to mobility issues, forcing them to physically interact with their devices more frequently. Lack of customization, such as disabling motion effects or adjusting interface settings to reduce strain, can also make digital applications challenging to use for those susceptible to motion sickness. Another example of these challenges is pop-up interruptions and motion effects. Frequent pop-ups and motion-heavy elements on a display can exacerbate motion sickness, disrupting the user experience and causing discomfort. These challenges may be more pronounced in low-income countries and middle-income countries, where disability prevalence may be underreported, and access to healthcare and assistive technologies is limited.

Example embodiments of the present disclosure provide a multifaceted approach and techniques that addresses the noted widespread accessibility issues. Particularly, example embodiments of the present disclosure provide systems, apparatuses, methods, and computer program products related to motion stabilized digital platforms for accessibility applications. Example embodiments integrate motion stabilization features into digital platforms (e.g., into user interfaces of various digital applications/platforms including user devices such as smart phones, laptops and various operating systems), which reduces unnecessary motion effects and enhances customization options to improve usability and accessibility for all users (e.g., including users with disability). For example, some embodiments utilize specially configured eye motion modeling techniques to improve the legibility of a moving screen by moving the image (e.g., objects, text, and/or the like) on the screen in synchronization (sync) with the user's eye gaze.

Some embodiments sense the motion on the screen and render an image that is an inverse of the sensed image such that when displayed on the moving screen, the image is space stabilized to prevent motion and retina blur associated with the moving screen. Some embodiments leverage inertial measurement units (which may include on-board inertial measurement units) and/or motion sensors to detect the user's motion (e.g., user's movement). Some embodiments identify the motion of the screen in relation with the user's motion and correct the motion of the screen (or otherwise compensate for the motion of the screen) to render a space stabilized image. Some embodiments, re-map the touch zones on the screen based on the sensed motion on the screen, such that the touch zones are space stabilized as well.

Example embodiments include a motion detection module that leverages device sensors (e.g., such as accelerometers and gyroscopes) to monitor and quantify motion in real-time. This data is then processed by the motion stabilization algorithm, which applies advanced filtering and compensation techniques to mitigate the effects of motion on the display. Example embodiments include a display adjustment engine that dynamically adjusts the user interface elements or content to counteract detected motion, enhancing visual stability and usability.

Examples embodiments, provide a motion stabilization software development kit (SDK) that integrates motion stabilization directly into display interfaces of various digital applications, ensuring a smoother and more accessible user experience. In various embodiments, the SDK is configured to intelligently tune the motion stabilization model based on the user (e.g., based upon the user's accessibility needs in some embodiments).

Accordingly, example embodiments of the present disclosure enhances accessibility in physical environments, digital platforms, and through the provision of assistive technologies. Improved data collection and reporting are essential to better understand and address the diverse needs of individuals with disabilities. Example embodiments provide at least (i) enhanced usability by stabilizing visual output and adjusting UI elements in real-time such that users with motion impairments will experience smoother interactions and reduced visual disturbances, making digital interfaces more accessible and easier to use. (ii) personalized experience by tailoring motion stabilization settings to each user's specific needs, accommodating a wide range of motion-related challenges and preferences; (iii) broader compatibility by providing SDK designed for seamless integration across various platforms, including mobile, web, and desktop environments, ensuring that users across different devices benefit from improved accessibility. In this regard, example embodiments of the present disclosure provide various technical advantages including enhancing the accessibility of digital interfaces for individuals with motion-related challenges and creating a more inclusive and user-friendly digital experience.

Example embodiments can be used in various domains including, but not limited to, avionics domain.

### Definitions

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

As used herein, the terms "application," "software application," "app," "computer program," "service," or similar terms refer to a computer program or group of computer programs designed to perform coordinated functions, tasks, or activities. Such computer programs may be operated by or for the benefit of a user or group of users. An application may be configured to provide access to one or more services provided by an entity. For example, an application may be configured to provide access to services provided by visual media content provider systems. An application may run on a server or group of servers, such as, but not limited to, web servers and application servers. In some embodiments, an application may be run on or across one or more other computing devices (e.g., user devices). For example, an application may be configured to be accessed via a web browser, a dedicated client running on a user device, and/or the like. In some examples, an application may be configured for use by and interaction with one or more local, networked or remote computing devices.

As used herein, the term "user device" refers a physical electronic device that may be used by a user for any of a variety of purposes including, but not limited to, one or more of sending and/or receiving signals, storing data, displaying data, viewing media content, extracting content data objects, generating relevance data objects, viewing relevance data objects, and/or generating, sending, and/or receiving segment selection indications. For example, the user device may be capable of, but not limited to, displaying media content. A user device may include a display.

As used herein, the term "display" (noun) refers to a visual output component of certain user devices that may be used to visually display content including, but not limited to visual media content, a captured image or other portion of visual media content, and/or an application (e.g., visual media content application or related application, including web pages and the like). In some embodiments, "displaying" or "display" (verb, gerund, etc.) may refer to the action performed by such displays.

### System Architecture

Embodiments of the present disclosure may be implemented in various ways, including as computer program products that comprise articles of manufacture, as hardware, including circuitry, configured to perform one or more functions, and/or as combinations of specific hardware and computer program products. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together, such as in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In some embodiments, a non-volatile computer-readable storage medium may include a floppy disk, flexible disk, hard disk, solid-state storage (SSS) (e.g., a solid-state drive (SSD), solid state card (SSC), solid state module (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as one or more methods, apparatuses, systems, computing devices (e.g., user devices, servers, etc.), computing entities, and/or the like. As such, embodiments of the present disclosure may take the form of an apparatus, system, computing device, computing entity, and/or the like executing instructions stored on one or more computer-readable storage mediums (e.g., via the aforementioned software components and computer program products) to perform certain steps or operations. Thus, embodiments of the present disclosure may also take the form of an entirely hardware embodiment, an entirely computer program product embodiment, and/or an embodiment that comprises combination of computer program products and hardware performing certain steps or operations.

Embodiments of the present disclosure are described below with reference to block diagrams, flowchart illustrations, and other example visualizations. It should be understood that each block of the block diagrams and flowchart illustrations may be implemented in the form of a computer program product, an entirely hardware embodiment, a combination of hardware and computer program products, and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments may produce specifically configured machines performing the steps or operations specified in the block diagrams and flowchart illustrations. In embodiments in which specific hardware is described, it is understood that such specific hardware is one example embodiment and may work in conjunction with one or more apparatuses or as a single apparatus or combination of a smaller number of apparatuses consistent with the foregoing according to the various examples described herein. Accordingly, the block diagrams and flowchart illustrations support various combinations of embodiments for performing the specified instructions, operations, or steps.

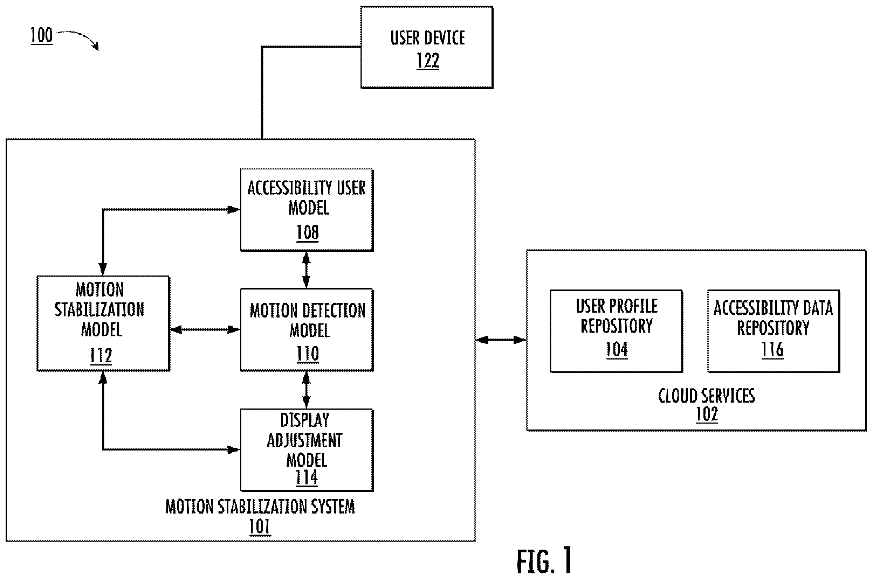

In this regard, Figure 1 shows an example system environment 100 within which at least some embodiments of the present disclosure may operate. The depiction of the example system environment 100 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, Figure 1 and the system environment 100 disclosed therein is merely presented to provide an example basis and context for the facilitation of some of the features, aspects, and uses of the methods, apparatuses, computer readable media, and computer program products disclosed and contemplated herein.

It will be understood that while many of the aspects and components presented in Figure 1 are shown as discrete, separate elements, other configurations may be used in connection with the methods, apparatuses, computer readable media, and computer programs described herein, including configurations that combine, omit, separate, and/or add aspects and/or components. For example, in some embodiments, the functions of one or more of the illustrated components in Figure 1 may be performed by a single computing device or by multiple computing devices, which devices may be local or cloud based.

As shown in Figure 1, the example system environment 100 includes a motion stabilization system 101. The motion stabilization system 101 may be in communication with cloud services 102 (e.g., cloud 102) and/or user device 122. Examples of user device 122 include, but are not limited to, tablet computers, laptop computers, augmented reality devices, smart phones, notepads, vehicle infotainment systems (e.g., car infotainments system, and/or the like), aircrafts display units, and/or the like. In various embodiments, the cloud services 102 includes a user profile repository 104 and accessibility data repository 116. In various embodiments, the motion stabilization system 101 comprises an accessibility user model 108, motion detection module 110, motion stabilization model, and/or display adjustment module 114. In various embodiments, the motion stabilization system 101 leverages the accessibility user model 108, motion detection module 110, motion stabilization model, and/or display adjustment module 114 to perform or facilitate performance of various functionalities associated with the motion stabilization system as described herein.

The motion stabilization system 101 leverages techniques according to one or more embodiments of the present disclosure to provide motion stabilization in digital platforms for accessibility applications (and other applications). In various embodiments, such digital platforms include user devices such as user device 122. In various embodiments, the motion stabilization system 101 utilizes specially-configured eye motion modeling techniques and/or models to improve the legibility of a moving screen by moving the image (e.g., objects, text, and/or the like) on the screen in synchronization (sync) with the user's eye gaze. In some embodiments, such models include a digital image stabilization algorithm. The digital stabilization algorithm may be configured for adjusting the position and/or orientation of the content/image displayed on the screen of a user device by interpolating one or more frames (e.g., rendered on or configured for rendering on the display of the device) and applying spatial transformations to reduce motion blur and jitter. In some embodiments, such models may include VOR prediction model and eye angular position tracking model.

A normal VOR response, for example, is a compensatory eye movement that counters head movement when the human neural system detects motion of the head in space. For instance, rotating the head on a horizontal plane to the right will induce the eye to rotate left relative to the head coordinate frame to stabilize the visual axis of the gaze and keep the image fixed on the retina during the head motion. This eye motion due to the VOR, however, is not an exact inverse of the head motion due to the dynamic effects from the neural sensors and oculomotor nucleus response and can result in an eye gaze being offset from a viewed object on a moving screen.

A VOR prediction model and an eye angular position tracking model may be configured for estimating the position change of a gaze of the user's eye on a screen of the user device. The eye angular VOR motion prediction model may be configured for determining a predicted eye position due to VOR effects and the eye angular position tracking model may be configured for correcting the predicted eye position after head motion has subsided. In some embodiments, the VOR motion prediction model and/or the eye angular position tracking model is a machine learning model.

In some embodiments, the motion stabilization model 112 defines or otherwise comprises the VOR prediction model and the eye angular position tracking model. For example, the motion stabilization model 112 may comprise a motion stabilization algorithm that defines the VOR prediction model and eye angular position tracking model. In some embodiments, the motion stabilization system 101 leverages other models for motion stabilization with respect to a moving screen of a user device (e.g., such as user device 122). Further, in some embodiments, the motion stabilization model may not define or comprise a VOR prediction model or an eye angular position tracking model. For example, in some embodiments, the motion stabilization model 112 may comprise a motion stabilization algorithm that is not based on a VOR prediction model or an eye angular position tracking model.

In some embodiments, the motion stabilization system 101 is configured to sense the motion on a screen (such as screen of a user device 122) and render an image that is an inverse of the sensed image such that when displayed on the moving screen, the image is space stabilized to prevent motion and retina blur associated with the moving screen. In some embodiments, the motion stabilization system 101 leverages inertial measurement units and/or motion sensors to detect the user's motion (e.g., user's movement). In some embodiments, at least a portion of the inertial measurement units and/or motion sensors are on-board inertial measurement units. In some embodiments, the motion stabilization system 101 identifies the motion of the screen in relation with the user's motion and corrects the motion of the screen (or otherwise compensates for the motion of the screen) to render a space stabilized image (e.g., stabilized image with respect to motion). In some embodiments, the motion stabilization system 101 is configured to re-map touch zones on the screen of the user device such as user device 122, based on the sensed motion on the screen, such that the touch zones are also space stabilized.

In some embodiments, the motion stabilization system 101 tailors/customizes motion stabilization (render space stabilized images on a moving screen) to the user. For example, the motion stabilization system 101 may provide a tailored/customized motion stabilization experience to each user based on the individual needs. In various embodiments, the motion stabilization system 101 leverages the various components thereof (e.g., accessibility user model 108, motion detection module 110, motion stabilization model, and/or display adjustment module 114) to perform or facilitate performance of various functionalities associated with the motion stabilization system including, but not limited to, motion stabilization (e.g., rendering space stabilized images on a moving screen, re-mapping touch zones to space stabilize the touch zones, and/or the like) and tailoring motion stabilization to the user.

In some embodiments, the motion stabilization system 101 leverages the accessibility user model 108 to perform the tailoring of motion stabilization to a user. For example, in such embodiments, the accessibility user model 108 may be configured for tailoring, or otherwise facilitating tailoring of, motion stabilization to the user. In various embodiments, the accessibility user model 108 is configured to create a user profile based on specific accessibility requirements by receiving, collecting, and/or aggregating user-specific data. In various embodiments, the created user profile is stored in the user profile repository 104. In the illustrated system environment 100 of FIG. 1, the user profile repository 104 is a cloud-based repository (e.g., maintained, hosted, and/or the like in the cloud by cloud services 102.vThe user-specific data may comprise information about a user's specific accessibility needs such as, for example, the severity of motion-related challenges or preferences for stabilization.

In various embodiments, the accessibility user model 108 is configured for adjusting stabilization parameters of the motion stabilization model 112 (e.g., parameters of the motion stabilization algorithm thereof) based on the user profile. For example in various embodiments, the system 101, using the accessibility user model 108 adjusts stabilization parameters of the motion stabilization model 112 (e.g., parameters of the motion stabilization algorithm thereof) based on the user profile. This may be done to ensure the stability effect is optimized for the user's unique/specific needs.

In various embodiments, the accessibility user model 108 is configured for displaying and/or providing the adjustment (e.g., adjusted parameters) to one or more other components of the motion stabilization system 101 (e.g., motion stabilization model 112 and/or display adjustment module 114). For example, in various embodiments, the system 101, using the accessibility user model 108, displays and/or provides the adjustment (e.g., adjusted parameters) to one or more other components of the motion stabilization system 101 (e.g., motion stabilization model 112 and/or display adjustment module 114).

In various embodiments, the accessibility user model 108, is configured to continuously update the user profile based on ongoing interaction data and user feedback which allows for adaptive changes to stabilization setting and improves the overall user experience. For example, in various embodiments, the system 101, using the accessibility user model 108, is continuously updates the user profile based on ongoing interaction data and user feedback.

In various embodiments, the motion detection module 110 is configured for capturing, determining, generating, and/or analyzing motion data associated with a user device such as user device 122. In various embodiments, such motion data associated with a user device comprise, or otherwise reflect, the motion of the screen of the user device. In various embodiments, the motion detection module 110 leverages sensors such as accelerometers and gyroscopes to detect and measure movement by the user device. For example, motion data associated with user device may be collected using accelerometers, gyroscopes, and/or the like. In this regard, in various embodiments, the system 101 (e.g., motion detection module 110 thereof) may receive motion data originating from one or more sensors such as accelerometers and gyroscopes. In some embodiments, at least a portion of the one or more sensors/sensor devices (e.g., accelerometers, gyroscopes, and/or the like may be built-in sensor devices). For example, the user device (such as user device 122) may include one or more sensors (e.g., accelerometers, gyroscopes, and/or the like may be built-in sensor devices) leveraged by the motion detection module 110 to determine and analyze motion data associated with the user device (e.g., including the screen of the user device).

In various embodiments, the motion data collected includes, but are not limited to, angular velocity, acceleration, and orientation. In various embodiments, the motion data is processed to determine the intensity and direction of the motion of the user device. In various embodiments, such intensity and direction of the motion of the device may comprise, or otherwise reflect, the motion of the screen of the user device. In various embodiments, the motion detection module 110 leverages filtering techniques, such as Kalman filters, complementary filters, and/or the like to ensure accurate and noise-reduced motion data. For example, processing the motion data may include applying one or more filters (e.g., Kalman filters, complementary filters, and/or the like) to the raw motion data from the one or more sensors (as described above).

In various embodiments, the motion stabilization model 112 (e.g., motion stabilization algorithm thereof) is configured to compensate for the motion detected by the motion detection module 110. For example, the motion stabilization model 112 may receive, from the motion detection module 110, the motion data captured by the motion detection module 110. As described above the motion detection module 110 may process the raw motion data received from the one or more sensors. In this regard, the motion data received from the motion detection module 110 may comprise processed motion data. Such process motion data may comprise one or more motion variables (e.g., intensity of the motion of the user device, direction, of the motion of the user device, and/or the like). In some embodiments, the motion stabilization model 112 (e.g., motion stabilization algorithm thereof) comprises or defines a motion stabilization algorithm. In some embodiments, the motion stabilization algorithm comprises a digital image stabilization algorithm configured for adjusting the position and/or orientation of the content displayed on the screen of the user device by interpolating frames (e.g., and applying spatial transformations to reduce motion blur and jitter. In some embodiments, the motion stabilization algorithm (e.g., the digital image stabilization algorithm thereof) is a machine learning based algorithm. In some embodiments, additionally, the motion stabilization model 112 may define other models. In some embodiments, the motion stabilization algorithm may comprise additional or other algorithms. In an example embodiment the motion stabilization algorithm may comprise VOR prediction algorithm and/or eye angular position tracking algorithm. For example, in some embodiments, the motion stabilization model 112 may define, or otherwise comprise, a VOR prediction model, an eye angular position tracking model, and/or other models.

In some embodiments, the motion stabilization model is a machine learning model (e.g., a data entity that describes parameters, hyper-parameters, and/or defined operations of a rules-based algorithm, machine learning model (e.g., model including at least one or more rule-based layers, one or more layers that depend on trained parameters, coefficients, and/or the like), and/or artificial intelligence model, and/or the like). In some embodiments, the motion stabilization model may include any type of model configured, trained, and/or the like to perform one or more operations and/or tasks related to and/or to support motion stabilization. In this regard, a motion stabilization model may be configured to utilize one or more of any types of machine learning, rules-based, and/or artificial intelligence techniques including one or more of, supervised learning (e.g., using user feedback), unsupervised learning, semi-supervised learning, reinforcement learning, computer vision techniques, sequence modeling techniques, language processing techniques, neural network techniques, and/or generative artificial intelligence techniques. In some embodiments, the motion stabilization model includes model stabilization algorithm as described herein. In some embodiments, the motion stabilization model includes a digital image stabilization algorithm configured for adjusting the position and/or orientation of the content displayed on the screen of the user device by interpolating frames and applying spatial transformations to reduce motion blur and jitter. In some embodiments, motion stabilization algorithm includes angular VOR motion prediction algorithm and/or eye angular VOR motion prediction algorithm. In some embodiments, the motion stabilization model may represent a motion stabilization model framework that includes two or more models such as for example VOR motion prediction model (e.g., comprising VOR motion prediction algorithm) and/or eye angular VOR motion prediction model (e.g., comprising eye angular VOR motion prediction algorithm), ad digital image stabilization model (e.g., comprising digital image stabilization algorithm, and/or other models).

Alternatively or additionally, in some embodiments, the motion stabilization model 112 (e.g., motion stabilization algorithm thereof) is configured to perform adaptive filtering (e.g., dynamic filtering technique), based on the detected motion (e.g., motion data), to adapt varying levels of motion (e.g., to ensure that stabilization remains effective under different conditions). In some embodiments, the motion stabilization model 112 (e.g., motion stabilization algorithm thereof) is configured to perform real-time adjustment by processing the motion data and updating the display content in real-time to maintain stability and to ensure a smooth user experience even under frequent or rapid movements.

In various embodiments, the display adjustment module 114 is configured to apply the output from the motion stabilization model 112 (e.g., motion stabilization algorithm thereof) to the visual elements on the screen. For example, the display adjustment module 114 may modify the position, size, and orientation of user interface (UI) components to counteract detected motion and maintain consistent alignment and readability. Alternatively or additionally, in some embodiments, the display adjustment module 114 is configured to adjust images, text and/or other content dynamically to ensure that visual output remains stable and legible. In various embodiments, the display adjustment module 114 is configured to adjust stabilization settings according to their preferences, such as sensitivity levels or stabilization intensity. For example, the display adjustment module 114 may provide user customization.

In some embodiments, the functions of one or more of the illustrated components of the motion stabilization system 101 and/or system environment 100 may be performed by a single computing device or by multiple computing devices, which devices may be local or cloud based. It will be appreciated that the various functions performed by two or more of the components of the system 101 and/or environment 100 may be performed by a single apparatus, subsystem, or system. For example, two or more of the accessibility user model 108, motion detection module110 display adjustment module 114, or motion stabilization model 112 may be embodied by a single apparatus, subsystem, or system comprising one or more sets of computing hardware (e.g., processor(s) and memory) configured to perform various functions thereof.

The various functions of the system 101, the system 101 and/or environment 100 may be performed by other arrangements of one or more computing devices and/or computing systems without departing from the scope of the present disclosure. In some embodiments, a computing system may comprise one or more computing devices (e.g., server(s)).

The various components illustrated in the system 101 and system environment 100 may be configured to communicate via one or more communication mechanisms, including wired or wireless connections, such as over a network, bus, or similar connection. For example, a network may include any wired or wireless communication network including, for example, a wired or wireless local area network (LAN), personal area network (PAN), metropolitan area network (MAN), wide area network (WAN), or the like, as well as any hardware, software and/or firmware required to implement it (such as, e.g., network routers, etc.). For example, the network may include a cellular telephone, an 802.11, 802.16, 802.20, and/or WiMAX network. Further, a network may include a public network, such as the Internet, a private network, such as an intranet, or combinations thereof, and may utilize a variety of networking protocols now available or later developed including, but not limited to TCP/IP based networking protocols.

In some embodiments, one or more APIs may be leveraged to communicate with and/or facilitate communication between one or more of the components illustrated in the system 101 and system environment 100.

### Example System Operation

Example embodiments of the present disclosure provide techniques for motion stabilization digital platforms for accessibility applications. Example embodiments integrate motion stabilization features into digital platforms, which reduces unnecessary motion effects and enhances customization options to improve usability and accessibility for all users (including users with disability). Some embodiments utilize specially configured eye motion modeling techniques to improve the legibility of a moving screen by moving the image (e.g., objects, text, and/or the like) on the screen in synchronization (sync) with the user's eye gaze.

In various embodiments, the system 101 senses the motion on the screen of the user device and renders an image that is an inverse of the sensed image such that when displayed on the moving screen, the image is space stabilized to prevent motion and retina blur associated with the moving screen. In some embodiments, the system 101 leverages inertial measurement units (which may include on-board inertial measurement units) and/or motion sensors to detect the user's motion (e.g., user's movement). In some embodiments, the system 101 identifies the motion of the screen in relation with the user's motion and corrects the motion of the screen (or otherwise compensates for the motion of the screen) to render a space stabilized image. In some embodiments, the system 101 re-maps the touch zones on the screen based on the sensed motion on the screen, such that the touch zones are space stabilized as well.

In various embodiments, the system 101, using the accessibility user model 108, is configured to tailor motion stabilization (render stabilized images on a moving screen) to the user. For example, in various embodiments, the accessibility user model 108 is configured to facilitate tailoring of motion stabilization with respect to a user device to the user (e.g., tailor motion stabilization experience to individual needs). In various embodiments, the system 101, using the accessibility user model 108 creates a user profile based on specific accessibility requirements by receiving, collecting, and/or aggregating user-specific data. The user-specific data may comprise information about a user's specific accessibility needs such as, for example, the severity of motion-related challenges or preferences for stabilization. In various embodiments, the system 101, using the accessibility user model 108, adjusts stabilization parameters of the motion stabilization model 112 (e.g., motion stabilization algorithm thereof) and displays the adjustment according to the user profile to ensure that the stability effect is optimized for the user's unique/specific needs. In various embodiments, the system 101, using the accessibility user model 108, continuously updates the user profile based on ongoing interaction data and user feedback which allows for adaptive changes to stabilization setting and improving the overall user experience.

In various embodiments, the system 101, using the motion detection module 110 captures motion data associated with the user device and processes the motion data to generate processed motion data. In various embodiments, the captured motion data includes angular velocity, acceleration, and orientation. In various embodiments, the motion data is processed to determine the intensity and direction of motion (and/or other motion variables). For example, in various embodiments, the processed motion data comprises intensity of the motion of the user device (e.g., including the screen thereof), direction of the motion of the user device (e.g., including the screen thereof), and/or other motion variables/parameters.

In various embodiments, the system 101 (e.g., the motion detection module 110) receives the raw motion data (e.g., motion data before processing) from sensors such as accelerometers and gyroscopes to detect and measure movement by the user device (e.g., to generate the processed data comprising one or more motion variables as described above). For example, motion data associated with user device may be collected using accelerometers, gyroscopes, and/or the like. The accelerometers and/or gyroscopes may be built-in sensors with respect to the user device.

In various embodiments, system 101, using the motion stabilization model 112 (e.g., motion stabilization algorithm thereof) compensates for the motion detected by the system 101 (e.g., detected using the motion detection module 110). For example, the motion stabilization model 112 is configured to compensate for the intensity of the motion of the user device, the direction of the motion of the user device, and/or the like. In some embodiments, the motion stabilization model 112 (e.g., motion stabilization algorithm thereof) comprises or defines a digital image stabilization algorithm configured for adjusting the position and/or orientation of display content by interpolating frames and applying spatial transformations to reduce motion blur and jitter.

In some embodiments, a frame is an individual image that makes up visual media content. A frame may be configured to be rendered on a display of a user device. A frame may be decomposable into one or more spatial segments. In some embodiments visual media content is any visual content provided to a user or configured to be provided to a user electronically via a display of a user device. Visual media content may be broken into one or more segments, such as temporal segments such as frames, clips, or other portions defined in visual presentation by time or substitutes for time (e.g., frame number) and/or spatial segments such as portions of a larger frame or other segment, which themselves may be divided into segments. Examples of visual media content include, but are not limited to, movies, television shows, streams (e.g., content delivered via Twitch TM or YouTube TM media platforms), short video clips (e.g., content delivered via Reels TM or TikTok TM media platforms), live event feeds, or other video content whether locally stored and played or remotely streamed and whether delivered over-the-air, via cable provider through a set top box, via internet stream, or through any other means. The visual media content may include one or more frames configured to be delivered sequentially to a user in a continuous manner and at a suitable rate (e.g., a standard video framerate, such as 20 to 240 Hz).

For example, in various embodiments compensating for the motion detected by the motion detection module of the system 101 comprises applying the processed motion data from the motion detection module 110 to the digital image stabilization algorithm. In some embodiments, the system 101, using the motion stabilization model 112 (e.g., motion stabilization algorithm thereof) performs adaptive filtering (e.g., dynamic filtering technique) to adapt varying levels of motion (e.g., to ensure that stabilization remains effective under different conditions). Alternatively or additionally, in some embodiments, the motion stabilization model 112 (e.g., motion stabilization algorithm thereof) is configured to perform real-time adjustment by processing motion data and updating the display content in real-time to maintain stability and to ensure a smooth user experience even under frequent or rapid movements.

In various embodiments, the system 101, using the display adjustment module 114 applies the output from the motion stabilization model 112 to the visual elements on the screen of the user device. For example, the system 101, using the display adjustment module 114 may modify the position, size, and orientation of UI components associated with the user device to counteract the detected motion (e.g., reflected in the processed motion data) and maintain consistent alignment and readability. In some embodiments, the system 101, using the display adjustment module 114 adjusts images, text and/or other content dynamically to ensure that visual output remains stable and legible. In various embodiments, the system 101, using the display adjustment module 114, adjusts the stabilization settings according to user preferences, such as sensitivity levels or stabilization intensity. For example, the system 101, using the display adjustment module 114, may provide user customization.

### Example Apparatuses of the Disclosure

Having discussed example systems in accordance with the present disclosure, example apparatuses in accordance with the present disclosure will now be described.

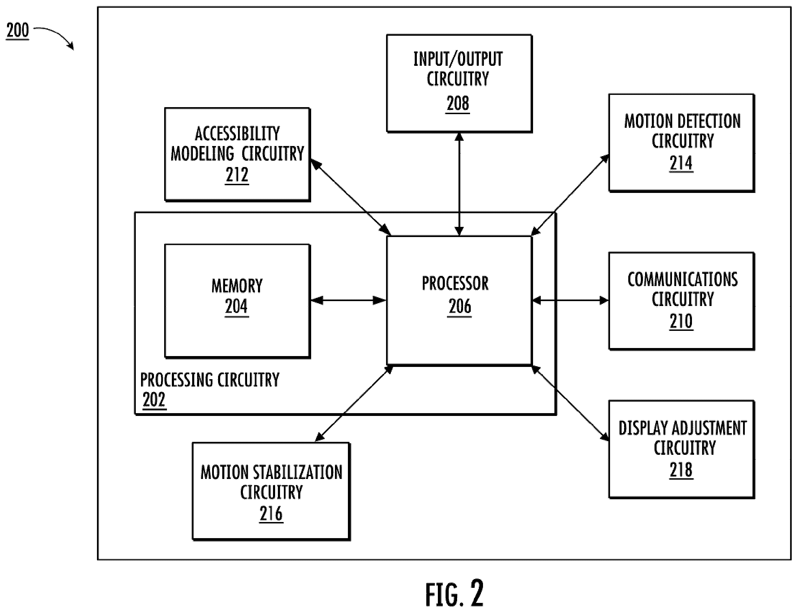

Figure 2 illustrates a block diagram of an apparatus 200 in accordance with some example embodiments. In some embodiments, the system 101 and/or system environment 100 or one or more portions thereof, if embodied in a particular embodiment, may be embodied by one or more apparatuses 200.

In some embodiments, the apparatus 200 may include a processing circuity 202 as shown in Figure 2. It should be noted, however, that the components, or elements illustrated in and described with respect to Figure 2 below may not be mandatory and thus one or more may be omitted in certain embodiments. Additionally, some embodiments, may include further or different components or elements beyond those illustrated in and described with respect to Figure 2. In some embodiments, the functionality of the motion stabilization system 101, the other devices and/or systems interacting with the motion stabilization system 101, or any subset thereof may be performed by a single apparatus 200 or multiple apparatuses 200. In some embodiments, the apparatus 200 may comprise one or a plurality of physical devices, including distributed, cloud-based, and/or local devices.

Although some components are described with respect to functional limitations, it should be understood that the particular implementations necessarily include the use of particular computing hardware, such as the hardware shown in Figure 2. It should also be understood that certain of the components described herein may include similar or common hardware. For example, two sets of circuitries for example, may both leverage use of the same processor(s), network interface(s), storage medium(s), and/or the like, to perform their associated functions, such that duplicate hardware is not required for each set of circuitry and a single physical circuitry may be used to perform the functions of multiple circuitries described herein. The use of the term "circuitry" as used herein with respect to components of the apparatuses described herein should therefore be understood to include particular hardware configured to perform the functions associated with the particular circuitry as described herein.

In some embodiments, "circuitry" may include processing circuitry, storage media, network interfaces, input/output devices, and/or the like. In some embodiments, other elements of the apparatus 200 may provide or supplement the functionality of another particular set of circuitry. For example, the processor 206 in some embodiments provides processing functionality to any of the sets of circuitries, the memory 204 provides storage functionality to any of the sets of circuitry, the communications circuitry 210 provide network interface functionality to any of the sets of circuitry, and/or the like.

The apparatus 200 may include or otherwise be in communication with processing circuitry 202 that is configurable to perform actions in accordance with one or more example embodiments disclosed herein. In this regard, the processing circuitry 202 may be configured to perform and/or control performance of one or more functionalities of the apparatus 200 in accordance with various example embodiments, and thus may provide means for performing functionalities of the apparatus 200 in accordance with various example embodiments. The processing circuitry 202 may be configured to perform data processing, application, and function execution, and/or other processing and management services according to one or more example embodiments. In some embodiments, the apparatus 200 or a portion(s) or component(s) thereof, such as the processing circuitry 202, may be embodied as or comprise a chip or chip set. In other words, apparatus 200 or the processing circuitry 202 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 200 or the processing circuitry 202 may therefore, in some cases, be configured to implement an embodiment of the disclosure on a single chip or as a single "system on a chip." As such, in some cases, a chip or chipset may constitute means for performing one or more operations for providing the functionalities described herein.

In some embodiments, the processing circuitry 202 may include a processor 206 (and/or co-processor or any other processing circuitry assisting or otherwise associated with the processor) and, in some embodiments, such as that illustrated in Figure 2, may further include memory 204. The processing circuitry 202 may be in communication with or otherwise control a user interface (e.g., embodied by input/output circuitry 208) and/or a communications circuitry 210. As such, the processing circuitry 202 may be embodied as a circuit chip (e.g., an integrated circuit chip) configured (e.g., with hardware, software or a combination of hardware and software) to perform operations described herein.

The processor 206 may be embodied in a number of different ways. For example, the processor 206 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. Although illustrated as a single processor, it will be appreciated that the processor 206 may comprise a plurality of processors. The plurality of processors may be in operative communication with each other and may be collectively configured to perform one or more functionalities of the apparatus 200 as described herein. In some example embodiments, the processor 206 may be configured to execute instructions stored in the memory 204 or otherwise accessible to the processor 206. As such, whether configured by hardware or by a combination of hardware and software, the processor 206 may represent an entity (e.g., physically embodied in circuitry - in the form of processing circuitry 202) capable of performing operations according to embodiments of the present disclosure while configured accordingly. Thus, for example, when the processor 206 is embodied as an ASIC, FPGA or the like, the processor 206 may be specifically configured hardware for conducting the operations described herein. Alternatively, as another example, when the processor 206 is embodied as an executor of software instructions, the instructions may specifically configure the processor 206 to perform one or more operations described herein. The use of the terms "processor" and "processing circuitry" may be understood to include a single core processor, a multi-core processor, multiple processors internal to the apparatus 200, and/or one or more remote or "cloud" processor(s) external to the apparatus 200.

In some example embodiments, the memory 204 may include one or more non-transitory memory devices such as, for example, volatile and/or non-volatile memory that may be either fixed or removable. In this regard, the memory 204 may comprise a non-transitory computer-readable storage medium. It will be appreciated that while the memory 204 is illustrated as a single memory, the memory 204 may comprise a plurality of memories. The memory 204 may be configured to store information, data, applications, instructions and/or the like for enabling the apparatus 200 to carry out various functions in accordance with one or more example embodiments. For example, the memory 204 may be configured to buffer input data for processing by the processor 206. Additionally or alternatively, the memory 204 may be configured to store instructions for execution by the processor 206. The memory 204 may include one or more databases that may store a variety of files, contents, or data sets. Among the contents of the memory 204, applications may be stored for execution by the processor 206 in order to carry out the functionality associated with each respective application. In some cases, the memory 204 may be in communication with one or more of the processors 206, input/output circuitry 208 and/or communications circuitry 210, via a bus(es) for passing information among components of the apparatus 200.

The input/output circuitry 208 may provide output to the user or an intermediary device and, in some embodiments, may receive one or more indication(s) of user input. In some embodiments, the input/output circuitry 208 is in communication with processor 206 to provide such functionality. The input/output circuitry 208 may include one or more user interface(s) and/or include a display that may comprise the user interface(s) rendered as a web user interface, an application interface, and/or the like, to the display of a user device, a backend system, or the like. The input/output circuitry 208 may be in communication with the processing circuitry 202 to receive an indication of a user input at the user interface and/or to provide an audible, visual, mechanical, or other output to the user. As such, the input/output circuitry 208 may include, for example, a keyboard, a mouse, a joystick, a display, a touch screen display, a microphone, a speaker, and/or other input/output mechanisms. As such, the input/output circuitry 208 may, in some example embodiments, provide means for a user to access and interact with the apparatus 200. The processor 206 and/or input/output circuitry 208 comprising or otherwise interacting with the processor 206 may be configured to control one or more functions of one or more user interface elements through computer program instructions (e.g., software and/or firmware) stored on a memory accessible to the processor 206 (e.g., stored on memory 204, and/or the like).

The communications circuitry 210 may include one or more interface mechanisms for enabling communication with other devices and/or networks. In some cases, the communications circuitry 210 may be any means such as a device or circuitry embodied in either hardware, or a combination of hardware and software that is configured to receive and/or transmit data from/to a network and/or any other device or module in communication with the processing circuitry 202. The communications circuitry 210 may, for example, include an antenna (or multiple antennas) and supporting hardware and/or software for enabling communications with a wireless communication network (e.g., a wireless local area network, cellular network, global positing system network, and/or the like) and/or a communication modem or other hardware/software for supporting communication via cable, digital subscriber line (DSL), universal serial bus (USB), Ethernet or other methods.

In some embodiments, the apparatus 200 may include an accessibility circuitry 212 which may include hardware components, software components, and/or a combination thereof configured to, with the processing circuitry 202, input/output circuitry 208 and/or communications circuitry 210, perform one or more functions associated with the accessibility user model 108 (as described above with reference to Figure 1).

In some embodiments, the apparatus 200 may include a motion detection circuitry 214 which may include hardware components, software components, and/or a combination thereof configured to, with the processing circuitry 202, input/output circuitry 208 and/or communications circuitry 210, perform one or more functions associated with the motion detection module 110 (as described above with reference to Figure 1).

In some embodiments, the apparatus 200 may include a motion stabilization circuitry 216 which may include hardware components, software components, and/or a combination thereof configured to, with the processing circuitry 202, input/output circuitry 208 and/or communications circuitry 210, perform one or more functions associated with the motion stabilization model 112 (as described above with reference to Figure 1).

In some embodiments, the apparatus 200 may include a display adjustment circuitry 218 which may include hardware components, software components, and/or a combination thereof configured to, with the processing circuitry 202, input/output circuitry 208 and/or communications circuitry 210, perform one or more functions associated with the display adjustment module 114 (as described above with reference to Figure 1).

### Example Processes/Methods For Enhanced Motion Stabilization In Digital Platforms

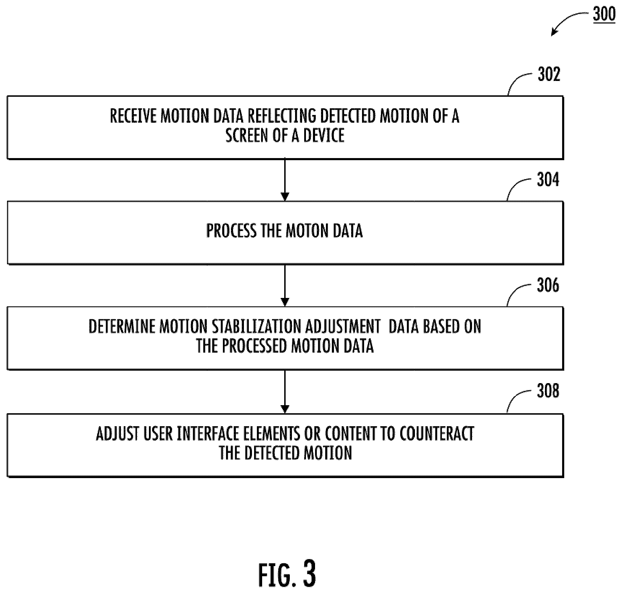

Figure 3 is a flow chart diagram showing example process for enhanced motion stabilization in digital platforms for accessibility in accordance with at least some example embodiments of the present disclosure. Specifically, Figure 3 is a flow chart diagram showing example process for enhanced motion stabilization in digital platforms for accessibility. In some example embodiments, the data structures and processes shown and described with respect to the flow chart of Figure 3 may be generated, performed, and/or otherwise facilitated by the various systems and apparatuses shown and described with respect to Figures 1-2.

As depicted at block 302, the process 300 begins with receiving, from one or more monitoring devices, motion data associated with a user device. For example, the motion data may be received from one or more sensor-based devices such as accelerometers, gyroscopes, and/or the like. In various embodiments, the motion data associated with the user device corresponds to motion data of the screen of the user device. For example, the motion data may represent motion of the user device which corresponds to the motion of the screen of the user device. In various embodiments, the motion data includes angular velocity, acceleration, and/or orientation.

At block 304, the process 300 continues with processing the motion data. The motion data may be processed to determine the intensity and direction of motion of the user device (e.g., which corresponds to the intensity and direction of motion of the user device). For example, the intensity and direction of motion of the user device may correspond to, or otherwise reflect, the intensity and direction of motion of the screen of the user device. In various embodiments, processing the motion data comprises analyzing the motion data.

At block 306, the process continues with determining motion stabilization adjustment data based on the process motion data. In various embodiments, a motion stabilization model is leveraged determine the motion stabilization adjustment data and applies to compensate for the motion of the screen of the user device. In various embodiments, the processed motion data is input to the motion stabilization model generate motion stabilization adjustment data based on the processed motion data so as to mitigate the effects of motion of the screen (e.g., compensate for the motion of the screen) of the user device. The motion stabilization adjustment data may comprise adjustment information for one or more motion-based parameters associated with the motion stabilization model.

In some embodiments, compensating for the motion of the screen of the user device comprises adjusting the position and/or orientation of the display content on the screen based on the motion stabilization adjustment data. In some embodiments, the motion stabilization model (e.g., motion stabilization algorithm thereof) comprises or defines a digital image stabilization algorithm configured for adjusting the position and/or orientation of display content by interpolating frames and applying spatial transformations to reduce motion blur and jitter. In some embodiments, adaptive filtering (e.g., dynamic filtering technique) is performed, using the motion stabilization model, to adapt varying levels of motion (e.g., to ensure that stabilization remains effective under different conditions). In some embodiments, the display content is updated (e.g., using the motion stabilization model) in real-time to maintain stability and to ensure a smooth user experience even under frequent or rapid

At block 308, the process 300 continues with adjusting the user interface elements (e.g., one or more user interface elements) or content to counteract the detected motion. In various embodiments, adjusting the user interface elements or content to counteract the detected motion comprises applying the output from the motion stabilization model 112 to the visual elements on the screen. For example, the system 101 (e.g., using the display adjustment module 114 thereof) may modify the position, size, and orientation of user interface components to counteract detected motion and maintain consistent alignment and readability. In some embodiments adjusting the one or more user interface elements comprises transmitting computer-executable instructions configured to change a position of the one or more user interface elements relative to the user interface. In some embodiments, the system 101 (e.g., using the display adjustment module 114 thereof) may adjust images, text and/or other content dynamically to ensure that visual output remains stable and legible. In some embodiments, the stabilization settings/parameters (e.g., corresponding to the user interface elements or content) are adjusted according to user preferences, such as sensitivity levels or stabilization intensity. In various embodiments, the system 101 adjust stabilization settings/parameters of the user in accordance to the user profile. The user profile may be retrieved from a user profile repository.

### Software Development Kit Architecture

In some embodiments, the motion stabilization system may be implemented as motion stabilization software development kit and/or provisioned, or otherwise embodied as a motion stabilization software development kit (motion stabilization SDK). The motion stabilization SDK integrates motion stabilization (as described above with respect to system 101) into display interfaces of various digital applications, ensuring a smoother and more accessible user experience. In various embodiments, the motion stabilization SDK is configured to intelligently tune the motion stabilization model (e.g., included in the motion stabilization SDK) based on the user (e.g., based upon the user's accessibility needs in some embodiments). In some embodiments, the motion stabilization software development kit comprises a set of components (e.g., including software tools and programs) configured for building motion stabilization applications to implement motion stabilization in various platforms. In some embodiments, the motion stabilization software development kit comprises a software development kit architecture having various layers each including a subset of the software components of the motion stabilization software development kit 101. In some embodiments, the components are connected via interfaces and/or other mechanisms. In some embodiments, the motion stabilization software development kit (e.g., one or more components thereof) provides a set of rules and recommendations on how to write or otherwise build motion stabilization-integrated software applications (and/or software modules thereof). In some embodiments, the software development kit architecture is a modular software framework..

In various embodiments, the motion stabilization SDK is designed to integrate seamlessly with various platforms (e.g., Android, iOS, Windows, macOS, and/or the like). In some example embodiments, for mobile devices, the motion stabilization SDK may be configured to provide APIs for easy integration into applications. In some embodiments, for web applications, a JavaScript/TypeScript library may be leveraged. In one example, desktop platforms may receive plugins or APIs to ensure comprehensive support across different environments.

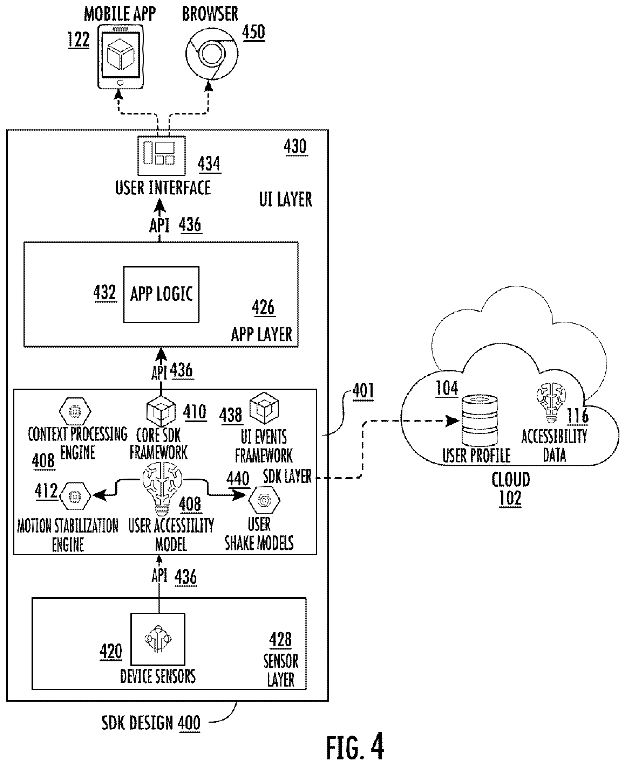

The motion stabilization software development kit may comprise the components of the system 101 described above. Figure 4 provides an example visualization of software development kit architecture 400 for a motion stabilization software development kit in accordance with at least some example embodiments of the present disclosure. The motion stabilization software development kit may be configured to communicate with the cloud 102 to perform one or more functionalities associated with the system 101 as described above including motion stabilization with respect to a moving screen of a user device. The software development kit may be integrated with a digital platform such as for example, a user device 122, a browser 450, and/or the like.

As shown in Figure 4, in various embodiments, the motion stabilization software development kit architecture 400 may include an SDK layer 401. In various embodiments, the SDK layer is configured to perform various functionalities including the functionalities of the system 101 described above (e.g., motion stabilization with respect to a moving screen). In various embodiments, the SDK layer 401 includes a context processing engine 408, a motion stabilization engine 412, an SDK framework 410, UI events framework 438, accessibility user models 108, and/or user shake model(s) 440. In various embodiments, each of the components of the system 101 (e.g., motion stabilization model 112, accessibility user model 108, motion detection module 110, display adjustment module 114) is represented by, or otherwise correspond to, at least one of the components of the SDK layer 401 such that it performs the function of the respective component of the system 101. In some embodiments, one or more of the components of the system 101 may be represented by other components from one or more of the other layers of the architecture 400.

The SDK layer 401 may include other and/or additional components. In some embodiments, the context processing engine 408 is configured for analyzing the current situation context and derive, or otherwise obtain, parameters that would drive the motion stabilization model. A non-limiting example of a current situation context comprise [Target Device: Mobile Phone, Context: Transit, State: Jogging, Sub State: Jogging in a Thread mill / Mountain]. The motion stabilization engine 412 may comprise the motion stabilization model such as motion stabilization model 112 (described above) and/or may be configured to execute the motion stabilization model.

In various embodiments, the software development kit architecture 400 further includes an application layer 426, a sensor layer 428, and a user interface layer 430. The application layer 426 may comprise an application logic 432 and the user interface layer 430 may comprise a user interface 434. The sensor layer 428 may comprise one or more device sensors 420. The one or more device sensors 420 may comprise accelerometers, gyroscopes, and/or the like leveraged to obtain motion data of the user device (e.g., the screen of the thereof).

In some embodiments, the sensor layer 428 (e.g., the one or more device sensors 420 thereof) may be configured to communicate with the SDK layer 401 and/or the application layer 426 via at least one of one or more APIs 436. In some embodiments, the SDK layer 401 may be configured to communicate with the user interface layer 430 (e.g., user interface 434 thereof) via at least one of the one or more APIs 436.

In various embodiments, one or more of the components of the software development kit architecture 400 is in communication with one or more repositories (e.g., user profile repository or accessibility data repository) in the cloud 102.

### Conclusion

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method for motion stabilization in a digital platform, the computer-implemented method comprising:
receiving, from one or more sensor devices, motion data associated with a user device;
processing the motion data to generate processed motion data that reflects motion of a screen of the user device and comprises one or more of intensity of the motion of the screen or direction of the motion of the screen;
generating, using a motion stabilization model and based on the processed motion data, stabilization adjustment data by applying the motion data to the motion stabilization model; and
adjusting one or more user interface elements associated with a user interface of the user device based on the stabilization adjustment data.

2. The computer-implemented method of claim 1, wherein adjusting the one or more user interface elements comprises transmitting computer-executable instructions configured to change a position of the one or more user interface elements relative to the user interface.

3. The computer-implemented method of claim 1, further comprising adjusting, using the motion stabilization model, a position and orientation of a display content on the screen of the user device.

4. The computer-implemented method of claim 3, wherein adjusting the position and the orientation of the display content comprises interpolating one or more frames and applying spatial transformations to reduce motion blur.

5. The computer-implemented method of claim 1, further comprising:
retrieving, from a database, user profile data associated with a user, the user profile data comprising accessibility data for the user.

6. The computer-implemented method of claim 5, wherein adjusting the one or more user interface elements further comprises adjusting the one or more user interface elements based on the user profile data.

7. The computer-implemented method of claim 1, wherein the motion data is received from the one or more sensor devices comprising one or more accelerometers.

8. An apparatus for motion stabilization in digital platforms, the apparatus comprising at least one processor and at least one memory storing instructions that, when executed by the at least one processor, cause the apparatus to:
receive motion data associated with a user device;
process the motion data to generate processed motion data that reflects motion of a screen of the user device and comprises one or more of intensity of the motion of the screen or direction of the motion of the screen;
generate, using a motion stabilization model and based on the processed motion data, stabilization adjustment data by applying the motion data to the motion stabilization model; and
adjust one or more user interface elements associated with a user interface of the user device based on the stabilization adjustment data.

9. The apparatus of claim 8, wherein adjusting the one or more user interface elements comprises transmitting computer-executable instructions configured to change a position of the one or more user interface elements relative to the user interface.

10. The apparatus of claim 8, further comprising adjusting, using the motion stabilization model, a position and orientation of a display content.

11. The apparatus of claim 10, wherein adjusting the position and the orientation of the display content comprises interpolating one or more frames and applying spatial transformations to reduce motion blur.

12. The apparatus of claim 8, further comprising:
retrieving, from a database, user profile data associated with a user, the user profile data comprising accessibility data for the user.

13. The apparatus of claim 12, wherein adjusting the one or more user interface elements further comprises adjusting the one or more user interface elements based on the user profile data.

14. The apparatus of claim 8, wherein the motion data is received from the one or more sensor devices comprising one or more accelerometers.

15. One or more non-transitory computer-readable storage media for motion stabilization in a digital platform, the one or more non-transitory computer-readable storage media including instructions that, when executed by one or more processors, cause the one or more processors to:
receive motion data associated with a user device;
process the motion data to generate processed motion data that reflects motion of a screen of the user device and comprises one or more of intensity of the motion of the screen or direction of the motion of the screen;
generate, using a motion stabilization model and based on the processed motion data, stabilization adjustment data by applying the motion data to the motion stabilization model; and
adjust one or more user interface elements associated with a user interface of the user device based on the stabilization adjustment data.
